# EUROPEAN PATENT APPLICATION

(11) **EP 3 595 357 A1**
(43) Date of publication of application: **15.01.2020**
(21) Application number: 18764403.4
(22) Date of filing: 07.02.2018
(51) Int. Cl.: H04W 28/26, G08G 1/017

(54) **COMMUNICATION METHOD AND DEVICE UTILIZED IN VEHICLE CONVOY**

(30) Priority: 10.03.2017 CN 201710142981
(71) Applicant: China Academy of Telecommunications Technology, Hai Dian District Beijing 100191 (CN)
(72) Inventor: CHEN, Zhe, Beijing 100191 (CN); LI, Xinyu, Beijing 100191 (CN)
(74) Representative: Körfer, Thomas
(86) International application number: PCT/CN2018/075654
(87) International publication number: WO 2018/161765

(57) **Abstract**

The invention discloses a communication method and device utilized in a vehicle convoy. The method comprises: a leader vehicle obtaining, from a network apparatus, a first quantity of communication resources; the leader vehicle allocating, according to the first quantity of the communication resource allocated by the network apparatus, a second quantity of the communication resource to a first follower vehicle in the vehicle convoy, and communicating, according to the second quantity of the communication resource, with the first follower vehicle, wherein the first follower vehicle is any one of follower vehicles in the vehicle convoy, and the second quantity is less than or equal to the first quantity. The embodiments provide a novel communication method utilized in a vehicle convoy to resolve an issue of a conventional roadside base station being incapable of timely allocating resources to a vehicle convoy.

## Description

This application claims the benefit of Chinese Patent Application No. 201710142981.7, filed with the Chinese Patent Office on March 10, 2017, and entitled "A method and device for communication in a vehicle queue", which is hereby incorporated by reference in its entirety.

### Field

The present invention relates to the field of communications, and particularly to a method and device for communication in a vehicle queue.

### Background

In recent years, as the number of traveling vehicles is growing rapidly, there are an increasing number of traffic jams, environmental issues, traffic accidents, etc. In order to improve the traffic flow, gas consumption can be lowered by lower a resisting force in the air, and the technology in which a plurality of vehicles at a short distance between them can travel in a queue thereof has been favored. The vehicles travel in the queue in such a way that a vehicle queue including a plurality of vehicles at a short distance between them travels on the same road, and the vehicles travel in the queue so that fore-and-aft movement of the vehicles can be controlled automatically to thereby alleviate their drivers from being fatigued, improve the safety of traffic, improve the economy of gas in the vehicles, and improve the traffic flow. This technology has been applied to traveling military vehicles, earthquake rescuing, and other scenarios.

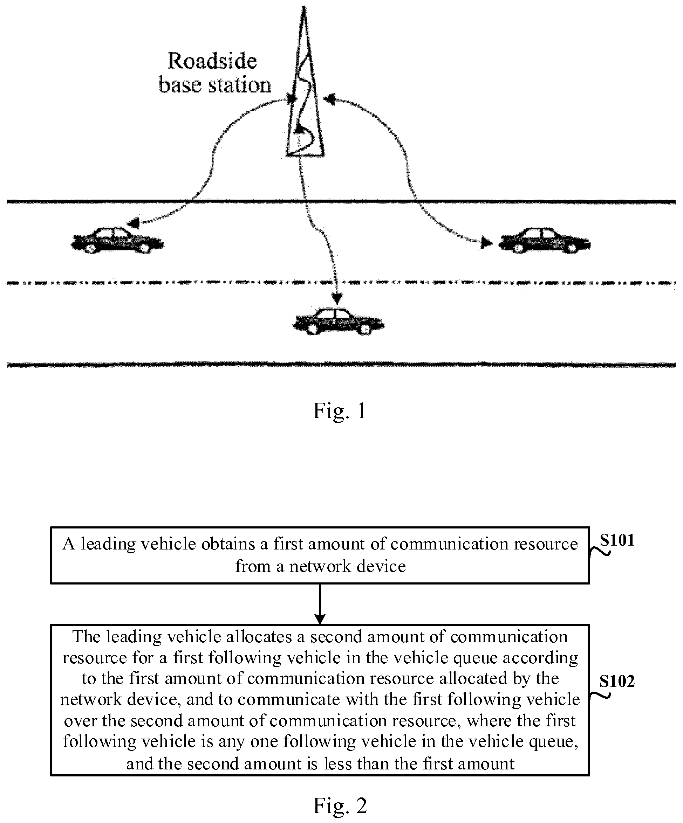

In the existing method for controlling a vehicle queue, respective vehicles in the vehicle queue are generally controlled by a roadside base station as illustrated in Fig. 1, where information is passed between the vehicles through the roadside base station, and the information shall be forwarded by the roadside base station instead of being passed directly between the vehicles. All the communication resources for the leading vehicles and the following vehicles in the vehicle queue are provided to the respective vehicles which request the roadside base station respectively for their communication resources, so uplink and downlink data are communicated between the roadside base station and the vehicle queue so frequently that when there is a sharp increase in number of users in a cell where the roadside base station is located, there may be a longer delay in processing signaling of the vehicles in the vehicle queue by the roadside base station, and the vehicles cannot be allocated their communication resources in a timely manner, thus resulting in a traffic jam, a traffic accident, etc.

### Summary

Embodiments of the invention provide a method and device for communication in a vehicle queue so as to address the problem in the prior art that the roadside base station cannot allocate the vehicle queue with resources in a timely manner, using the new method for communication in a vehicle queue.

In a first aspect, embodiments of the invention provide a method for communication in a vehicle queue, the method including:
obtaining, by a leading vehicle, a first amount of communication resource from a network device; and
allocating, by the leading vehicle, a second amount of communication resource for a first following vehicle in the vehicle queue according to the first amount of communication resource allocated by the network device;
and communicating, by the leading vehicle, with the first following vehicle over the second amount of communication resource, wherein the first following vehicle is any one following vehicle in the vehicle queue, and the second amount is less than the first amount.

Optionally obtaining, by the leading vehicle, the communication resource from the network device includes:
sending, by the leading vehicle, a first communication resource request to the network device, wherein the communication resource request comprises a total number M of vehicles in the vehicle queue to which the leading vehicle belongs; and
receiving, by the leading vehicle, the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

Optionally the method further includes: if the leading vehicle determines that the total number of vehicles in the vehicle queue is changed to N, then sending a second communication resource request including the second amount to the network device, wherein the second communication resource request indicates the network device to allocate a communication resource for the leading vehicle according to the total number N of vehicles, wherein M and N are not equal, and N is a positive integer.

Optionally after the leading vehicle allocates the second amount of communication resource for the first following vehicle in the vehicle queue according to the first amount of communication resource allocated by the network device, the method further includes:
receiving, by the leading vehicle, a resource reallocation request, including a third amount, sent by the first following vehicle, wherein the resource reallocation request including the third amount indicates to the first following vehicle that the currently requested amount of communication resource is the third amount; and
allocating, by the leading vehicle, the adjusted amount of communication resource for the first following vehicle according to the third amount in the resource reallocation request.

Optionally before the leading vehicle communicates with the first following vehicle over the second amount of communication resource, the method further includes:
setting up, by the leading vehicle, a communication link with the first following vehicle, wherein the communication resource includes K sub-bands.

In a second aspect, based upon the same inventive idea, embodiments of the invention further provide a device for communication in a vehicle queue, the device including:
an obtaining unit configured to obtain a first amount of communication resource from a network device;
an allocating unit configured to allocate a second amount of communication resource for a first following vehicle in the vehicle queue according to the first amount of communication resource allocated by the network device; and
a communicating unit configured to communicate with the first following vehicle over the second amount of communication resource, wherein the first following vehicle is any one following vehicle in the vehicle queue, and the second amount is less than the first amount.

Optionally the device further includes:
a sending unit configured to send a first communication resource request to the network device, wherein the communication resource request comprises a total number M of vehicles in the vehicle queue to which the leading vehicle belongs; and
a receiving unit configured to receive the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

Optionally the device further includes:
a determining unit configured to determine whether the total number of vehicles in the vehicle queue is changed to N; and
if so, then the sending unit is further configured to send a second communication resource request including the second amount to the network device, wherein the second communication resource request indicates the network device to allocate a communication resource for the leading vehicle according to the total number N of vehicles, wherein M and N are not equal, and N is a positive integer.

Optionally the receiving unit is further configured to receive a resource reallocation request, including a third amount, sent by the first following vehicle, wherein the resource reallocation request including the third amount indicates to the first following vehicle that the currently requested amount of communication resource is the third amount; and
the allocating unit is further configured to allocate the adjusted amount of communication resource for the first following vehicle according to the third amount in the resource reallocation request.

Optionally the device further includes a setting-up unit configured to set up a communication link with the first following vehicle, wherein the communication resource includes K sub-bands, wherein K is a positive integer.

In a third aspect, based upon the same inventive idea, embodiments of the invention further provide a device for communication in a vehicle queue, the device including: a processor, a memory, and a transceiver, wherein:
the processor is configured to read and execute program in the memory to:
obtain a first amount of communication resource from a network device; allocate a second amount of communication resource for a first following vehicle in the vehicle queue according to the first amount of communication resource allocated by the network device; and communicate with the first following vehicle over the second amount of communication resource, wherein the first following vehicle is any one following vehicle in the vehicle queue, and the second amount is less than the first amount.

Optionally the processor is further configured to:
send a first communication resource request to the network device, wherein the communication resource request comprises a total number M of vehicles in the vehicle queue to which the leading vehicle belongs; and receive the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

Optionally the processor is further configured to:
if it is determined that the total number of vehicles in the vehicle queue is changed to N, send a second communication resource request including the second amount to the network device, wherein the second communication resource request indicates the network device to allocate a communication resource for the leading vehicle according to the total number N of vehicles, wherein M and N are not equal, and N is a positive integer.

Optionally the processor is further configured to:
receive a resource reallocation request, including a third amount, sent by the first following vehicle, wherein the resource reallocation request including the third amount indicates to the first following vehicle that the currently requested amount of communication resource is the third amount; and allocate the adjusted amount of communication resource for the first following vehicle according to the third amount in the resource reallocation request.

Optionally the processor is further configured to:
set up a communication link with the first following vehicle.

Optionally the communication resource includes K sub-bands, wherein K is a positive integer.

In a fourth aspect, embodiments of the invention provide a readable storage medium including program codes configured to cause a computing device to perform the method in the first aspect, upon being executed on the computing device.

The existing method for communication with a vehicle queue is improved in the embodiments of the invention so that a leading vehicle requests a network device for a communication resource, where the network device is a roadside base station or a drive tester, and the leading vehicle allocates a corresponding communication resource for each following vehicle in the vehicle queue after obtaining the total amount of communication resource required of the vehicle queue, so that the leading vehicle can communicate with the following vehicle over the communication resource allocated for the following vehicle, and the following vehicle can be controlled by the leading vehicle without communicating with the roadside base station, so that the leading vehicle can travel before the following vehicle while maintaining automatically a short distance between the traveling lead and following vehicles. This short distance of the following vehicle from the leading vehicle is far shorter than a vehicle distance which can be maintained by a normal driver driving a motored vehicle, so that a wind resisting force acting on the motored vehicle can be lowered, gas consumption thereof can be lowered, a driving effort of the driver can be saved, and a driving safety coefficient can be improved.

### Brief Description of the Drawings

In order to make the technical solutions according to the embodiments of the invention more apparent, the drawings to which reference is to be made in the description of the embodiments will be introduced below in brevity, and apparently the embodiments to be described below are only some embodiments of the invention. Those ordinarily skilled in the art can further derive the other drawings from these drawings without any inventive effort.
Fig. 1 is a schematic diagram of a communication system for controlling a vehicle queue in the prior art.
Fig. 2 is a schematic flow chart of a method for communication in a vehicle queue according to embodiments of the invention.
Fig. 3 is a schematic diagram of interaction between a leading vehicle and a roadside base station according to the embodiments of the invention.
Fig. 4 is a schematic diagram of interaction between the leading vehicle and a following vehicle to set up a communication connection between them according to the embodiments of the invention.
Fig. 5 is a schematic diagram of interaction between the leading vehicle and the following vehicle to allocate a resource for the following vehicle according to the embodiments of the invention.
Fig. 6 is a schematic architectural diagram of a device for communication in a vehicle queue according to the embodiments of the invention.
Fig. 7 is a schematic architectural diagram of another device for communication in a vehicle queue according to the embodiments of the invention.

### Detailed Description of the Embodiments

In order to make the objects, technical solutions, and advantages of the embodiments of the invention more apparent, the invention will be described below in further details with reference to the drawings, and apparently the embodiments to be described below are only a part but not all of the embodiments of the invention. Based upon the embodiments here of the invention, all the other embodiments which can occur to those ordinarily skilled in the art without any inventive effort shall fall into the scope of the invention.

As illustrated in Fig. 2 which is a schematic flow chart of a method for communication in a vehicle queue according to embodiments of the invention, the method particularly includes the following steps.

Step S101 is to obtain by a leading vehicle a first amount of communication resource from a network device.

Step S102 is to allocate by the leading vehicle a second amount of communication resource for a first following vehicle in the vehicle queue according to the first amount of communication resource allocated by the network device, and to communicate by the leading vehicle with the first following vehicle over the second amount of communication resource, where the first following vehicle is any one following vehicle in the vehicle queue, and the second amount is less than the first amount.

In the steps above, the network device typically refers to a roadside base station or a drive tester which is typically deployed along a road or a railway so that a vehicle traveling on the road and the railway can communicate with the drive tester. Furthermore the vehicle queue includes the leading vehicle and a plurality of following vehicles, and the number of following vehicles in the vehicle queue may vary while the vehicle queue is traveling, for example, some vehicle may temporarily quit due to a failure, or a new following vehicle may join.

Before the step S101 is performed, the leading vehicle sends a first communication resource request to the network device, where the communication resource request comprises a total number M of vehicles in the vehicle queue to which the leading vehicle belongs.

The leading vehicle receives the first amount of communication resources allocated by the network device for the vehicle queue, where the first amount of communication resource is allocated by the network device upon reception of the first communication resource request, and the first amount of communication resource is determined by the network device according to the total number M of vehicles.

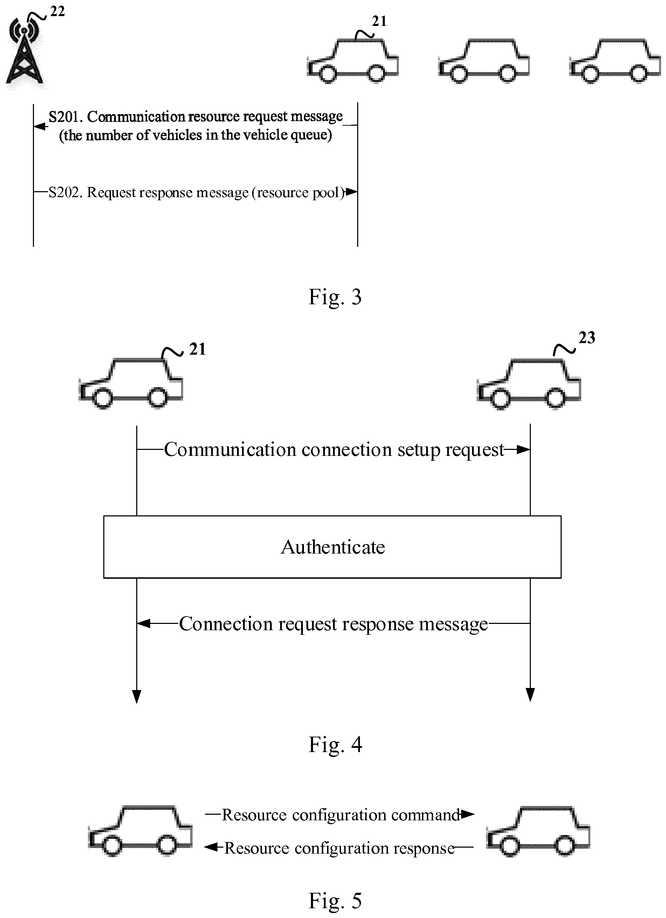

Stated otherwise, Fig. 3 illustrates a schematic diagram of interaction between the leading vehicle and the roadside base station particularly as follows.

In step S201, the leading vehicle 21 sends a communication resource request message to the roadside base station 22, where the message includes the identifier ID of the current vehicle queue, and the total number 3 of vehicles in the vehicle queue.

In step S202, the roadside base station 22 determines the amount of communication resources to be allocated for the vehicle queue, according to the total number 3 of vehicles in the vehicle queue, and sends the allocated communication resource to the leading vehicle in the vehicle queue with the ID, so in the step S102, the network device allocates the first amount of communication resources for the leading vehicle, where the first amount is determined according to the number M of vehicles in the vehicle queue, and for example, if the number of vehicles in the vehicle queue is 3, then the network device may allocate a communication resource including three sub-bands for the vehicle queue. The communication resource refers to a frequency band in a bandwidth of a radio communication resource, and the network device sends a response message to the leading vehicle, where the response message includes frequency information, the size of a single sub-band, the number of sub-bands, etc.

Furthermore before the leading vehicle communicates with the first following vehicle over the second amount of communication resources, the method further includes: setting up by the leading vehicle a communication link with the first following vehicle.

It shall be noted that before the communication link is set up, the leading vehicle firstly sets up communication connections with the respective following vehicles, that is, as illustrated in Fig. 4, the leading vehicle 21 sends one-to-one setup request to the respective following vehicles 23, and then the respective following vehicles 23 authenticates the identifier of the leading vehicle in the setup requests, and if it is authenticated successfully, then the respective following vehicles 23 will be connected with the leading vehicle 21, that is, they send response messages of a setup success to the leading vehicle 21, and the leading vehicle will allocate some amount of communication resource, i.e., the second amount of communication resource, for the respective following vehicles, in the vehicle queue, corresponding to their identifiers. As illustrated in Fig. 5, the leading vehicle can send a physical layer message or an application layer resource configuration command to each following vehicle, and the following vehicle can send a resource configuration response message to the leading vehicle upon reception of the resource configuration command, so that the leading vehicle and the following vehicle can subsequently communicate over the configured communication resource after the communication resource is configured.

Furthermore after the leading vehicle sends the first communication resource request to the network device, the method further includes: if the leading vehicle determines that the total number of vehicles in the vehicle queue is changed to N, then the leading vehicle will send a second communication resource request including the second amount to the network device, where the second communication resource request indicates the network device to allocate a communication resource for the leading vehicle according to the total number N of vehicles, where M and N are not equal, and N is a positive integer.

Stated otherwise, when a following vehicle quits the vehicle queue, a communication resource of the quitting vehicle shall be reclaimed; otherwise the resource may be wasted, so the leading vehicle can perform resource requesting and reallocating procedures again, that is, the communication resource will be reallocated to thereby make reasonable use of the communication resource. Alike when a new following vehicle joins the vehicle queue, the new following vehicle can communicate only after it is allocated a communication resource, so at this time, the leading vehicle can perform the resource requesting and reallocating procedures again to allocate a resource for the following vehicle in the vehicle queue according to the newly obtained communication resource.

Furthermore when a traffic model of some following vehicle is changed, the size of a data packet generated by the vehicle, the periodicity of the data packet, and an offset of a transmission instance of time of the data packet are changed accordingly, so the vehicle shall request the leading vehicle for a communication resource again to thereby satisfy its new communication demand. Particularly the leading vehicle receives a resource reallocation request, including a third amount, sent by the first following vehicle, where the resource reallocation request including the third amount indicates to the first following vehicle that the currently requested amount of communication resource is the third amount; and the leading vehicle allocates the adjusted amount of communication resource for the first following vehicle according to the third amount in the resource reallocation request.

Particularly in a system for driving a vehicle queue automatically, a following vehicle sends a resource reallocation request including the size of a data packet (so that a leading vehicle allocates the following vehicle with a size of resource block occupied each time), the periodicity of the data packet, and an offset of a transmission instance of time of the data packet.

The leading vehicle determines whether there is a sufficient resource, upon reception of the resource reallocation request sent by the following vehicle, and if so, then the leading vehicle will allocate the following vehicle with the same amount of communication resource as the amount of resource requested by the following vehicle; otherwise, the leading vehicle will allocate some amount of communication resource as large as possible for the following vehicle; and when the following vehicle determines that the received amount of communication resource is less than the requested amount of communication resource, the following vehicle adjusts the periodicity at which the data packet is transmitted, to thereby access the communication resource as infrequently as possible.

Apparently the method for communication in a vehicle queue according to the embodiments of the invention can avoid the leading vehicle from communicating with the network device, and enable the leading vehicle to request for a communication resource according to the amount of communication resource required of the vehicle queue to thereby avoid the communication resource from being wasted.

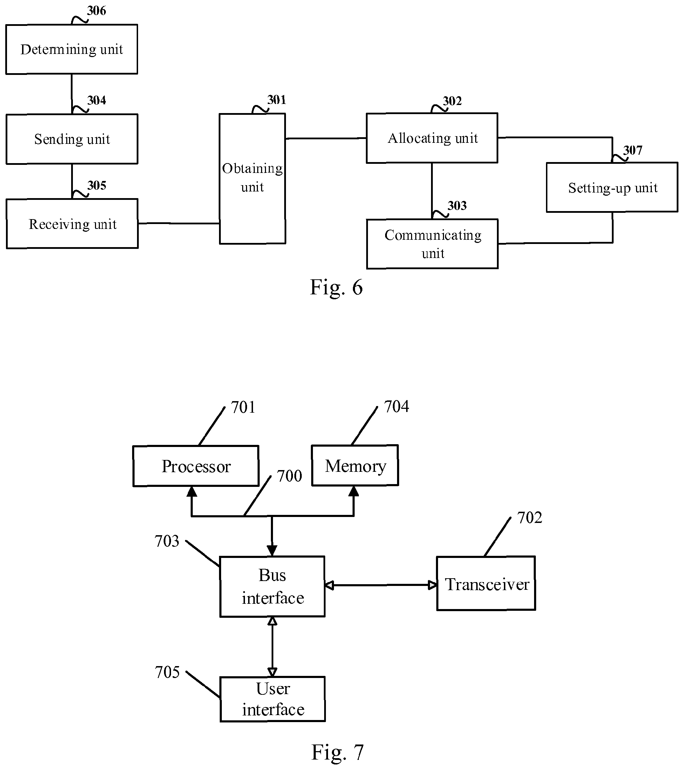

Based upon the same inventive idea, embodiments of the invention further provide a device for communication in a vehicle queue, where the device can be integrated in a leading vehicle of the vehicle queue, and can perform the method above according to the embodiments of the invention. The device according to the embodiments of the invention as illustrated in Fig. 6 includes an obtaining unit 301, an allocating unit 302, and a communicating unit 303.

The obtaining unit 301 is configured to obtain a first amount of communication resource from a network device.

The allocating unit 302 is configured to allocate a second amount of communication resource for a first following vehicle in the vehicle queue according to the first amount of communication resource allocated by the network device.

The communicating unit 303 is configured to communicate with the first following vehicle over the second amount of communication resource, where the first following vehicle is any one following vehicle in the vehicle queue, and the second amount is less than the first amount.

Particularly the communication resource includes K sub-bands.

Optionally the device further includes: a sending unit 304 is configured to send a first communication resource request to the network device, where the communication resource request comprises a total number M of vehicles in the vehicle queue to which the leading vehicle belongs; and a receiving unit 305 is configured to receive the first amount of communication resources allocated by the network device for the vehicle queue, where the first amount of communication resource is allocated by the network device upon reception of the first communication resource request, and the first amount of communication resource is determined by the network device according to the total number M of vehicles, where M is a positive integer.

Optionally the device further includes a determining unit 306 configured to determine whether the total number of vehicles in the vehicle queue is changed to N; and if so, then the sending unit 304 will be further configured to send a second communication resource request including the second amount to the network device, where the second communication resource request indicates the network device to allocate a communication resource for the leading vehicle according to the total number N of vehicles, where M and N are not equal, and N is a positive integer.

Optionally the receiving unit 305 is further configured to receive a resource reallocation request, including a third amount, sent by the first following vehicle, where the resource reallocation request including the third amount indicates to the first following vehicle that the currently requested amount of communication resource is the third amount; and the allocating unit is further configured to allocate the adjusted amount of communication resource for the first following vehicle according to the third amount in the resource reallocation request.

Optionally the device further includes a setting-up unit 307 configured to set up a communication link with the first following vehicle.

Embodiments of the invention further provide a device for communication in a vehicle queue, where the device can be integrated in a leading vehicle of the vehicle queue, and can perform the method above according to the embodiments of the invention. As illustrated in Fig. 7, the device according to the embodiments of the invention includes a processor 701, a transceiver 702, and a memory 704.

The processor 701 is configured to transmit and receive data through the transceiver 702, and to read and execute program in the memory 704 to: obtain a first amount of communication resource from a network device; to allocate a second amount of communication resource for a first following vehicle in the vehicle queue according to the first amount of communication resource allocated by the network device; and communicate with the first following vehicle over the second amount of communication resource, where the first following vehicle is any one following vehicle in the vehicle queue, and the second amount is less than the first amount.

The transceiver 702 is configured to transmit and receive data under the control of the processor 701.

Optionally the processor 701 is further configured to: send a first communication resource request to the network device, where the communication resource request comprises a total number M of vehicles in the vehicle queue to which the leading vehicle belongs; and receive the first amount of communication resources allocated by the network device for the vehicle queue, where the first amount of communication resource is allocated by the network device upon reception of the first communication resource request, and the first amount of communication resource is determined by the network device according to the total number M of vehicles, where M is a positive integer.

Optionally the processor 701 is further configured to: if it is determined that the total number of vehicles in the vehicle queue is changed to N, send a second communication resource request including the second amount to the network device, where the second communication resource request indicates the network device to allocate a communication resource for the leading vehicle according to the total number N of vehicles, where M and N are not equal, and N is a positive integer.

Optionally the processor 701 is further configured to: receive a resource reallocation request, including a third amount, sent by the first following vehicle, where the resource reallocation request including the third amount indicates to the first following vehicle that the currently requested amount of communication resource is the third amount; and allocate the adjusted amount of communication resource for the first following vehicle according to the third amount in the resource reallocation request.

Optionally the processor 701 is further configured to: set up a communication link with the first following vehicle.

Optionally the communication resource comprises K sub-bands, where K is a positive integer.

In Fig. 7, in the bus architecture (represented by a bus 700), the bus 700 can include any number of interconnecting buses and bridges to particularly link together various circuits including one or more processors represented by the processor 701, and one or more memories represented by the memory 704. The bus 700 can further link together various other circuits, e.g., a peripheral device, a manostat, a power management circuit, etc., all of which are well known in the art, so a further description thereof will be omitted in this context. The bus interface 703 serves as an interface between the bus 700 and the transceiver 702. The transceiver 702 can be an element, or a number of elements, e.g., a transmitter and a receiver, which are units for communication with various other devices over a transmission medium. For example, the transceiver 702 receives external data from another device. The transceiver 702 is configured transmit data processed by the processor 701 to the other device. Dependent upon the nature of a computing system, the user interface 705 can be further provided, e.g., a keypad, a monitor, a speaker, a microphone, a joystick, etc.

The processor 701 is responsible for managing the bus 700 and performing normal processes, e.g., running a general operating system, and the memory 704 can store data for use by the processor 701 in performing the operations.

Optionally the processor 701 can be a Central Processing Unit (CPU), an Application-Specific Integrated Circuit (ASIC), a Field-Programmable Gate Array (FPGA), or a Complex Programmable Logic Device (CPLD).

Embodiment of the invention further provide a readable storage medium including program codes configured to cause a computing device to perform the steps of the leading vehicle, upon being executed on the computing device.

In summary, in the embodiments of the invention, the existing method for communication with a vehicle queue is improved so that a leading vehicle requests a network device for a communication resource, where the network device is a roadside base station or a driver tester, and the leading vehicle allocates a corresponding communication resource for each following vehicle in the vehicle queue after obtaining the total amount of communication resource required of the vehicle queue, so that the leading vehicle can communicate with the following vehicle over the communication resource allocated for the following vehicle, and the following vehicle can be controlled by the leading vehicle without communicating with the roadside base station, so that the leading vehicle can travel before the following vehicle while maintaining automatically a short distance between the traveling lead and following vehicles. This short distance of the following vehicle from the leading vehicle is far shorter than a vehicle distance which can be maintained by a normal driver driving a motored vehicle, so that a wind resisting force acting on the motored vehicle can be lowered, gas consumption thereof can be lowered, a driving effort of the driver can be saved, and a driving safety coefficient can be improved.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for communication in a vehicle queue, the method comprising:
obtaining, by a leading vehicle, a first amount of communication resource from a network device; and
allocating, by the leading vehicle, a second amount of communication resource for a first following vehicle in the vehicle queue according to the first amount of communication resource allocated by the network device; and
communicating, by the leading vehicle, with the first following vehicle over the second amount of communication resource, wherein the first following vehicle is any one following vehicle in the vehicle queue, and the second amount is less than the first amount.

2. The method according to claim 1, wherein obtaining, by the leading vehicle, the first amount of communication resource from the network device comprises:
sending, by the leading vehicle, a first communication resource request to the network device, wherein the communication resource request comprises a total number M of vehicles in the vehicle queue to which the leading vehicle belongs; and
receiving, by the leading vehicle, the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

3. The method according to claim 2, wherein after the leading vehicle sends the first communication resource request to the network device, the method further comprises:
if the leading vehicle determines that the total number of vehicles in the vehicle queue is changed to N, then sending a second communication resource request comprising the second amount to the network device, wherein the second communication resource request indicates the network device to allocate a communication resource for the leading vehicle according to the total number N of vehicles, wherein M and N are not equal, and N is a positive integer.

4. The method according to claim 1 or 2, wherein after the leading vehicle allocates the second amount of communication resource for the first following vehicle in the vehicle queue according to the first amount of communication resource allocated by the network device, the method further comprises:
receiving, by the leading vehicle, a resource reallocation request, comprising a third amount, sent by the first following vehicle, wherein the resource reallocation request comprising the third amount indicates to the first following vehicle that the currently requested amount of communication resource is the third amount; and
allocating, by the leading vehicle, the adjusted amount of communication resource for the first following vehicle according to the third amount in the resource reallocation request.

5. The method according to any one of claims 1 to 3, wherein before the leading vehicle communicates with the first following vehicle over the second amount of communication resource, the method further comprises:
setting up, by the leading vehicle, a communication link with the first following vehicle.

6. The method according to any one of claims 1 to 3, wherein the communication resource comprises K sub-bands, wherein K is a positive integer.

7. A device for communication in a vehicle queue, the device comprising:
an obtaining unit configured to obtain a first amount of communication resource from a network device;
an allocating unit configured to allocate a second amount of communication resource for a first following vehicle in the vehicle queue according to the first amount of communication resource allocated by the network device; and
a communicating unit configured to communicate with the first following vehicle over the second amount of communication resource, wherein the first following vehicle is any one following vehicle in the vehicle queue, and the second amount is less than the first amount.

8. The device according to claim 7, wherein the device further comprises:
a sending unit configured to send a first communication resource request to the network device, wherein the communication resource request comprises a total number M of vehicles in the vehicle queue to which the leading vehicle belongs; and
a receiving unit configured to receive the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

9. The device according to claim 8, wherein the device further comprises:
a determining unit configured to determine whether the total number of vehicles in the vehicle queue is changed to N; and
if so, then the sending unit is further configured to send a second communication resource request comprising the second amount to the network device, wherein the second communication resource request indicates the network device to allocate a communication resource for the leading vehicle according to the total number N of vehicles, wherein M and N are not equal, and N is a positive integer.

10. The device according to claim 7 or 8, wherein the receiving unit is further configured to receive a resource reallocation request, comprising a third amount, sent by the first following vehicle, wherein the resource reallocation request comprising the third amount indicates to the first following vehicle that the currently requested amount of communication resource is the third amount; and
the allocating unit is further configured to allocate the adjusted amount of communication resource for the first following vehicle according to the third amount in the resource reallocation request.

11. The device according to any one of claims 7 to 9, wherein the device further comprises a setting-up unit configured to set up a communication link with the first following vehicle.

12. The device according to any one of claims 7 to 9, wherein the communication resource comprises K sub-bands, wherein K is a positive integer.

13. A device for communication in a vehicle queue, the device comprising a processor, a memory, and a transceiver, wherein:
the processor is configured to read and execute program in the memory to:
obtain a first amount of communication resource from a network device; allocate a second amount of communication resource for a first following vehicle in the vehicle queue according to the first amount of communication resource allocated by the network device; and communicate with the first following vehicle over the second amount of communication resource, wherein the first following vehicle is any one following vehicle in the vehicle queue, and the second amount is less than the first amount.

14. The device according to claim 13, wherein the processor is further configured to:
send a first communication resource request to the network device, wherein the communication resource request comprises a total number M of vehicles in the vehicle queue to which the leading vehicle belongs; and receive the first amount of communication resources allocated by the network device for the vehicle queue, wherein the first amount of communication resource is allocated by the network device upon reception of the first communication resource request, and the first amount of communication resource is determined by the network device according to the total number M of vehicles, wherein M is a positive integer.

15. The device according to claim 14, wherein the processor is further configured to:
if it is determined that the total number of vehicles in the vehicle queue is changed to N, send a second communication resource request comprising the second amount to the network device, wherein the second communication resource request indicates the network device to allocate a communication resource for the leading vehicle according to the total number N of vehicles, wherein M and N are not equal, and N is a positive integer.

16. The device according to claim 13 or 14, wherein the processor is further configured to:
receive a resource reallocation request, comprising a third amount, sent by the first following vehicle, wherein the resource reallocation request comprising the third amount indicates to the first following vehicle that the currently requested amount of communication resource is the third amount; and allocate the adjusted amount of communication resource for the first following vehicle according to the third amount in the resource reallocation request.

17. The device according to any one of claims 13 to 15, wherein the processor is further configured to:
set up a communication link with the first following vehicle.

18. The device according to any one of claims 13 to 15, wherein the communication resource comprises K sub-bands, wherein K is a positive integer.

19. A readable storage medium, comprising program codes configured to cause a computing device to perform the method according to any one of claims 1 to 6, upon being executed on the computing device.
